# FASCICULE DE BREVET EUROPEEN

(11) **EP 1 325 057 B1**
(45) Date de publication et mention de la délivrance du brevet: **14.12.2005**
(21) Numéro de dépôt: 01974426.7
(22) Date de dépôt: 03.10.2001
(51) Int. Cl.: C08G 69/28, C08G 69/04, B01J 19/00

(54) **PROCEDE DE FABRICATION DE POLYAMIDES**
VERFAHREN ZUR HERSTELLUNG VON POLYAMIDEN
METHOD FOR MAKING POLYAMIDES

(30) Priorité: 04.10.2000 FR 0012678
(43) Date de publication de la demande: 09.07.2003
(73) Titulaire: RHODIA POLYAMIDE INTERMEDIATES, 69192 Saint-Fons (FR)
(72) Inventeur: THIERRY, Jean-François, F-69340 FRANCHEVILLE (FR); HELFT, Matthieu, F-69003 LYON (FR)
(74) Mandataire: Esson, Jean-Pierre
(86) Numéro de dépôt international: PCT/FR2001/003045
(87) Numéro de publication internationale: WO 2002/028942

(56) Documents cités:
- WO-A-96/16107
- WO-A-99/61511
- US-A- 5 339 255

## Description

La présente invention concerne un procédé continu de fabrication de polyamides. Les polyamides sont du type de ceux obtenus à partir de diacides et de diamines. L'invention se rapporte plus particulièrement à la phase de démarrage de procédés de fabrication de polyamides.

Les polyamides sont des polymères présentant un intérêt industriel et commercial important. Les polyamides thermoplastiques sont obtenus soit par réaction entre deux monomères différents, soit par polycondensation d'un seul monomère. L'invention s'applique aux polyamides issus de deux monomères différents, dont le polyamide le plus important est le poly(hexaméthylène adipamide). Bien entendu, ces polyamides peuvent être obtenus à partir d'un mélange de diacides et de diamines. Ainsi, dans le cas du poly(hexaméthylène adipamide), les monomères principaux sont l'hexaméthylène diamine et l'acide adipique. Toutefois, ces monomères peuvent comprendre jusqu'à 25 % en mole d'autres monomères diamines ou diacides ou même des monomères aminoacides ou lactames.

Cette classe de polyamides issus de deux monomères différents est généralement fabriquée en utilisant comme matière première, un sel acide d'amine obtenu par mélange en quantité stoechiométrique et dans un solvant comme l'eau d'un diacide avec une diamine.

Ainsi, dans la fabrication du poly(hexaméthylène adipamide), l'acide adipique est mélangé avec de l'hexaméthylène diamine dans de l'eau pour obtenir un adipate d'hexaméthylène diamine plus connu sous le nom de sel Nylon ou "Sel N".

La solution de sel N est éventuellement concentrée par évaporation de l'eau.

Le polyamide est obtenu par chauffage à température et pression élevées d'une telle solution de sel Nylon pour évaporer l'eau tout en évitant toute formation de phase solide pour éviter une prise en masse.

Cette opération consomme beaucoup d'énergie, mais également ne permet pas de contrôler totalement la stoechiométrie car de l'amine peut être évaporée ou entraînée par l'eau. Un tel entraînement ou évaporation requiert une maîtrise du procédé pour rétablir la stoechiométrie et peut être gênant car la diamine entraînée peut polluer les effluents rejetés par l'installation de production.

En outre, l'obligation de chauffer à une température élevée sous une pression élevée peut provoquer la formation de composés de dégradation qui altèrent les performances du polyamide fabriqué, notamment au niveau des caractéristiques mécaniques et de sa couleur.

Pour éviter d'utiliser des quantités importantes d'eau, il a déjà été proposé certains procédés de préparation d'un polyamide sans eau et sans solvant. On cite les documents WO 96/16107, WO 99/61511, et WO 00/77075.
Les procédés décrits dans ces documents comportent les étapes suivantes :
- mélange en continu de deux flux de précurseurs du polyamide, un flux riche en groupements terminaux acides, et un flux riche en groupements terminaux amines,
- condensation à partir du mélange des deux flux,
   le mélange et la condensation étant mis en oeuvre dans une même installation ou dans des installations différentes,
- récupération d'un flux de produit issu de l'opération de condensation,
   au moins un des débits des flux de précurseur étant asservi au résultat de l'analyse des teneurs en groupements terminaux acides et amines du mélange, du milieu de condensation ou du flux récupéré, de manière à maintenir ces teneurs et/ou leur rapport entre deux valeurs de consigne.

Plus précisément, le document WO 99/61511 décrit un procédé dans lequel on mélange de l'acide adipique (AdOH) fondu avec de l'hexaméthylène diamine (HMD) liquide ou en solution très concentrée. Le mélange est introduit dans un réacteur à recirculation pourvu de moyens de chauffage. Les flux des monomères sont asservis à l'analyse de la quantité de groupements terminaux acides et de groupements terminaux amines dans le composé obtenu. Une méthode d'analyse décrite est la spectroscopie Proche Infra-Rouge (PIR). La phase de démarrage du procédé, c'est-à-dire les opérations précédant l'établissement d'un régime permanent, n'est pas décrite.

Le document WO 00/77075 mentionné ci-dessus décrit le mélange de deux flux de mélanges déséquilibrés M2 et M3, comprenant l'un et l'autre respectivement plus et moins de diacide que de diamine, dans des rapports diacide/diamine compris respectivement entre 1,005 et 1,2 et entre 0,8 et 0,995. Une méthode d'analyse décrite est également la spectroscopie Proche Infra-Rouge (PIR). Les mélanges M2 et M3 peuvent respectivement être obtenus par mélange d'un mélange diacide/diamine, de composition voisine de 81:19 en masse et d'une diamine : cette diamine est introduite respectivement en défaut et en excès par rapport à la quantité de diacide dans les mélanges M2 et M3. La phase de démarrage du procédé n'est pas décrite.

Les performances des procédés décrits ci-dessus, notamment en terme de qualité du polyamide, de productivité, sont liées à leur régulation, par le contrôle du produit obtenu et l'asservissement des flux de précurseurs à ce contrôle. Tant que le produit récupéré n'est pas conforme aux spécifications, la matière utilisée est considérée comme perdue. Ceci influe beaucoup sur la rentabilité du procédé. La phase de démarrage, jusqu'à l'obtention d'une régulation satisfaisante et d'un régime permanent, avec un produit sortant conforme aux spécifications, revêt donc une grande importance. En outre plus le produit issu de la phase de démarrage est éloigné du point de fonctionnement, plus la régulation est longue et/ou difficile à obtenir. Ceci est particulièrement vrai dans le cadre d'un contrôle par spectrométrie PIR, sensible, nécessitant une calibration préalable par des méthodes d'analyses physiques, chimiques ou physico-chimiques. La régulation à l'aide de cette méthode, qui présente par ailleurs d'autres avantages, pour l'obtention d'un point de fonctionnement éloigné du point de démarrage peut s'avérer longue.

Force est de constater que l'état de la technique ne contient pas d'enseignement sur des procédures de démarrage de procédés de fabrication en continu de polyamide à partir d'un mélange de deux flux de précurseurs, l'un riche en diacides, l'autre riche en diamines.

La présente invention a pour objectif de proposer un procédé de fabrication de polyamide comprenant une phase de démarrage particulièrement avantageuse, à plusieurs égards. Elle permet de constituer des fonds de cuve dans les installations, empêchant des phénomènes de précipitation, cristallisation, dégradation, ou des hétérogénéités intempestives ; elle permet de parvenir à une régulation rapide et satisfaisante; elle permet d'éviter des pertes de matière importantes, le produit sortant lors de la phase de démarrage étant un polyamide obtenu selon un procédé s'apparentant à un procédé usuel à partir d'une solution aqueuse d'un sel stoechiométrique diacide/diamine.

A cet effet, l'invention propose un procédé de fabrication en continu de polyamide, à partir de diacides carboxyliques et de diamines, comprenant les étapes décrites ci-dessus en régime permanent, et dont la phase de démarrage comprend les étapes suivantes:
- étape 1:
   - Alimentation de l'installation de condensation en une solution aqueuse comprenant des ions dicarboxylates et des ions diammoniums, en proportions telles que leur rapport molaire soit compris entre 0,99 et 1,01, de préférence entre 0,995 et 1,005
   - Mise en régime de l'installation de condensation dans des conditions de température et de pression telles qu'il y ait condensation à partir des ions dicarboxylates et des ions diammoniums initialement compris dans la solution aqueuse
- étape 2: récupération d'un flux du produit de condensation
- étape 3: alimentation en flux de précurseurs et activation de l'analyse et de l'asservissement.

Le polyamide est du type de ceux obtenus à partir à partir de monomères de type diacides carboxyliques et de monomères de type diamines.

Par précurseur riche en groupements terminaux acides, on peut entendre :
- des monomères de type diacides purs (c'est à dire exempts de monomères de type diamines), sous forme solide ou fondue, ou en solution concentrée (éventuellement sous forme ionisée).
- des mélanges de monomères de type diacides et de monomères de type diamines, en proportion non stoechiométrique, comprenant plus de monomères de type diacides que de monomères de type diamines, sous forme fondue et/ou en solution concentrée (éventuellement sous forme ionisée) .
- des produits d'amidification, obtenus à partir de mélanges de monomères de type diacides et de monomères de type diamines, présentant une quantité de groupements terminaux acides supérieure à la quantité de groupements terminaux amines, de préférence avec un degré de polymérisation inférieur à 20.
Par précurseur riche en groupements terminaux amines, on peut entendre :
- des monomères de type diamines purs (c'est à dire exempts de monomères de type diacides), sous forme solide ou fondue, ou en solution concentrée (éventuellement sous forme ionisée).
- des mélanges de monomères de type diacides et de monomères de type diamines, en proportion non stoechiométrique, comprenant plus de monomères de type diamines que de monomères de type diacides, sous forme fondue et/ou en solution concentrée (éventuellement sous forme ionisée).
- des produits d'amidification, obtenus à partir de mélanges de monomères de type diacides et de monomères de type diamines, présentant une quantité de groupements terminaux amines supérieure à la quantité de groupements terminaux acides, de préférence avec un degré de polymérisation inférieur à 20.

En régime permanent, le procédé comprend au moins une opération de mélange d'un flux d'un précurseur riche en groupements terminaux diacides, et d'un flux d'un précurseur riche en groupements terminaux diamines. L'opération de mélange peut être mise en oeuvre dans une installation spécialement prévue à cet effet, par exemple dans une zone de mélangeurs statiques. Elle peut être mise en oeuvre dans une installation où sont mises en oeuvre également d'autres opérations, par exemple une opération de condensation. Il peut par exemple s'agir d'un réacteur agité ou à recirculation dans lequel sont introduits simultanément les deux flux. L'installation dans laquelle est effectuée le mélange est appelée installation de mélange.

Le mélange est soumis à une opération de condensation, c'est-à-dire une opération au cours de laquelle des monomères ou oligomères réagissent pour former des chaînes macromoléculaires, ou des oligomères polyamides. Au cours de cette opération, le degré de polycondensation augmente. L'opération de condensation est généralement mise en oeuvre à des températures supérieures à 180°C et à pression supérieure à 5 bars, de préférence à des températures supérieures à 220°C et à une pression comprise entre 5 et 20 bars. Les indications de pression de la présente invention sont des pressions absolues, par opposition à des pressions relatives. Le produit de condensation présente de préférence un degré de polycondensation supérieur à 10, de préférence supérieur à 20. Le produit issu de cette opération peut être appelé prépolymère, si son degré de polycondensation n'excède pas 100. L'installation, ou les installations, dans laquelle est mise en oeuvre la condensation est appelée installation de condensation. Si les installations où sont réalisés le mélange et la condensation ne font qu'une, ladite installation est appelée installation de mélange ou installation de condensation selon l'opération à laquelle on s'intéresse.

On récupère un flux du produit issu de l'opération de condensation. En régime permanent, le débit de matière issu de ce flux est sensiblement égal, en terme de quantité de matière, à la somme des débits des flux de précurseurs. On mesure les quantités de groupements terminaux acides et amines du produit constituant ce flux, et on asservit au moins un des débits de flux de précurseurs à cette mesure, de manière à ce que ces quantités restent comprises entre deux valeurs de consigne, et/ou soient telles que le rapport entre la quantité de groupements terminaux acides et la quantité de groupements terminaux amines soit compris entre deux valeurs de consignes, de préférence proches de 1. L'analyse peut également être effectuée sur le mélange des flux, ou sur un produit en cours de polycondensation. A titre indicatif, la marge de variation préférée de ce rapport molaire par comparaison avec la valeur désirée est de plus ou moins 0,0005.

Une méthode d'analyse particulièrement avantageuse pour la mise en oeuvre du procédé est la spectrométrie Proche Infra-Rouge. Cette technique de détermination d'une propriété d'un polymère a par exemple été décrite dans les brevets US 5.532.487 et WO 96/16107. Ainsi, dans le brevet US 5.532.487, la méthode d'analyse spectrométrique par Proche Infra Rouge est utilisée pour la détermination des concentrations des fonctions terminales acides et amines dans un polyamide à l'état solide, par exemple sur un fil, ou sur des mélanges diacide / diamine anhydre.

De même, le brevet WO 96116107 décrit l'utilisation d'une méthode d'analyse spectrométrique Proche Infra Rouge pour déterminer la concentration en fonctions terminales acides et/ou amines dans un polyamide en sortie de réacteur en milieu fondu. Toutefois, dans ces deux exemples le polyamide analysé est sensiblement anhydre.

Dans un mode de réalisation particulier de l'invention, cette détermination de la concentration en fonctions terminales acide et/ou amine est réalisée par analyse de la masse réactionnelle contenant l'eau résultant de la réaction d'amidification, par exemple dans une boucle de dérivation du flux principal, dans une dérivation optionnelle du flux principal dans une boucle de recirculation d'un réacteur.

Selon le degré de polycondensation du produit récupéré, on peut introduire celui-ci dans des installations de flashage et/ou de finition, afin d'augmenter encore ledit degré de polycondensation. L'opération de flashage est destinée à ramener la produit à pression atmosphérique. Elle est généralement suivie d'une séparation de l'eau produite au cours de la condensation. La séparation peut être mise en oeuvre dans une installation ouverte aux gaz, par exemple un séparateur de type cyclone. Les étapes successives de flashage et de finition comprennent une évaporation rapide de l'eau de condensation contenue dans le polyamide sortant du réacteur de polymérisation, obtenue par exemple, par détente du flux de polyamide. Le polyamide est ensuite maintenu pendant un temps déterminé à une température de polymérisation sous pression atmosphérique, ou sous pression réduite, pour obtenir le degré de polycondensation désiré.

Les installations peuvent de plus comprendre des moyens destinés à véhiculer les flux de matières, ou à les placer dans les conditions de température et de pression mentionnés, tels que des pompes, vannes, échangeurs de chaleur, dispositifs de contrôle et de régulation de la pression, instrumentation pour analyses...

Dans une première étape de démarrage du procédé, on alimente l'installation de condensation, et éventuellement l'installation de mélange avec une solution aqueuse comprenant des ions dicarboxylates et des ions diammoniums, en proportions molaires comprises entre 0,99 et 1,01, de préférence entre 0,995 et 1,005. Ce rapport est très proche de la stoechiométrie, la solution n'est pas considérée comme un précurseur riche en groupements terminaux acides ou amines. Il peut par exemple s'agir d'un solution aqueuse d'adipate d'hexaméthylène-diammonium, à une concentration en poids comprise entre 40% et 65%. Cette première alimentation est réalisée de manière à remplir les installations au moins partiellement. Des vannes permettant de couper la récupération des produits en deçà des installations de conderisation peuvent être fermées lors de cette première alimentation. L'alimentation peut comprendre plusieurs phases, par exemple une phase d'alimentation préalable avec de l'eau, puis une phase d'alimentation avec une solution comprenant les ions, ou avec un sel sous forme solide, ou avec des monomères acides et amines, afin d'obtenir la solution. La stoechiométrie des ions dicarboxylates et diammoniums peut par exemple être contrôlée par pH-métrie ou spectrométrie Proche Infra Rouge.

Après l'alimentation en solution, on met en régime l'installation de condensation en température et pression telles qu'il y ait condensation à partir des ions initialement compris dans la solution.

Dans le mode de réalisation pour lequel le monomère acide est l'acide adipique et le monomère amine est l'hexaméthylène diamine, la solution comprenant le sel d'hexaméthylène-diammonium est de préférence chauffée à une température supérieure à 180°C et à une pression supérieure à 5 bars. Cette opération est avantageusement mise en oeuvre dans un réacteur sous pression. Les installations peuvent comprendre des dispositifs spécialement destinés à la mise en oeuvre de cette phase, tels que des dispositifs permettant d'évacuer de l'eau, et/ou de travailler sous pression. De telles conditions, en fonction des types d'installations sont connues de l'homme du métier.

Au cours d'une deuxième étape, on récupère un flux de produit issu de la condensation à partir de la solution. Selon un mode avantageux le produit récupéré présente des teneurs de groupements terminaux acides et amines très proches de celles visées en régime permanent.

On précise que les phases d'alimentation en solution et de condensation à partir de la solution peuvent être mises en oeuvre sur des flux continus. Les flux de solution ou de produit de condensation ne correspondant encore pas au niveau de condensation désiré, peuvent être éliminés, stockés, ou réintroduits dans les installations. Ces flux ne correspondent pas au flux récupérés du produit de condensation.

Au cours d'une troisième étape on effectue les opérations permettant au procédé de fonctionner selon le régime permanent. On alimente ainsi les installations, éventuellement par l'intermédiaire d'une installation de mélange, en flux de précurseurs, et on active le système d'analyse et d'asservissement d'au moins un des débits de ces flux. L'alimentation en flux de précurseurs et l'activation de l'analyse et de l'asservissement peuvent être successives ou simultanées. L'analyse est avantageusement mise en oeuvre par spectrométrie Proche Infra Rouge. Selon un procédé avantageux, au moins une partie du flux du produit de condensation à partir de la solution est récupérée et utilisée pour calibrer le spectromètre Proche Infra-Rouge dans la gamme désirée de teneurs en groupements terminaux et/ou en rapports des teneurs, l'alimentation en deux flux, l'analyse et l'asservissement étant activés après cette opération. On peut mettre en oeuvre à cette fin la méthode des ajouts dosés : on ajoute dans le produit des quantités connues de diacide et/ou de diamine et calibre le spectromètre sur la réponse obtenue.

L'alimentation en un flux de précurseur peut être entendue comme l'alimentation d'un précurseur préparé auparavant dans une autre installation. Elle peut également être entendue comme l'activation d'un système d'analyse d'un flux et d'asservissement à cette analyse des paramètres de préparation du flux. Le flux alimenté peut ainsi passer progressivement d'un flux de produit qui n'est pas considéré comme le précurseur en régime permanent, à un flux de produit constituant le précurseur.

Au cours du temps le produit récupéré passe progressivement d'un produit obtenu par polycondensation à partir principalement de la solution aqueuse, à un produit obtenu par polycondensation à partir principalement du mélange des deux flux de précurseurs. Ce processus permet de parvenir rapidement à une régulation du procédé en régime permanent, sans perte de produit, le produit récupéré en début de procédé s'apparentant à un polyamide obtenu à partir d'une solution de sel, en proportions sensiblement stoechiométriques.

On précise que la deuxième et la troisième étape peuvent être réalisées simultanément ou successivement.

Comme mentionné précédemment, on passe progressivement au cours de la deuxième étape d'une condensation à partir d'une solution aqueuse de sel, à une condensation à partir d'un mélange de précurseurs. Les conditions de condensation peuvent sensiblement varier au cours de cette étape. Selon un mode de réalisation préférentiel les conditions de température et de pression de condensation pour l'étape 1 et pour le régime permanent sont identiques.

Le procédé de l'invention peut être utilisé pour la fabrication de poly(hexaméthylène adipamide), à partir d'acide adipique comme monomère diacide et d'hexaméthylène diamine comme monomère diamine.

Le procédé de l'invention permet également de fabriquer d'autres polyamides à partir de monomères diacides choisis dans le groupe comprenant les acides glutarique, subérique, sébacique, dodécanedioïque, isophtalique, téréphtalique, azélaïque, pimélique, naphtaléne dicarboxylique, par exemple.

Comme monomères diamines, en plus de l'hexaméthylène diamine, on peut citer également l'heptaméthylène diamine, la tétraméthylène diamine, l'octaméthylène diamine, la nonaméthylène diamine, la décaméthylène diamine, la méthyl-2 pentaméthylène diamine, l'undécaméthylène diamine, la dodécaméthylène diamine, la xylylène diamine, l'isophorone diamine.

L'invention s'applique préférentiellement à la fabrication de polyamide à partir de monomères diacide et diamine dont au moins 80 % en mole sont respectivement l'acide adipique et l'hexaméthylène diamine.

Il est également possible de préparer des polyamides à partir de monomères diacides et diamines comprenant une faible proportion (inférieure à 20 % en mole) d'aminoacide ou de lactame. On peut ainsi citer la fabrication de copolyamide PA 6,6/6, à partir de monomères acide adipique/hexaméthylène diamine contenant une quantité déterminée de caprolactame.

Selon un premier mode de réalisation de l'invention, le précurseur riche en groupements terminaux acides est un mélange fondu de diacide et de diamine, avec un rapport molaire diacide/diamine compris entre 0,8 et 0,995, de préférence entre 0,8 et 0,99; le précurseur riche en groupements terminaux amines est un mélange fondu de diacide et de diamine, avec un rapport molaire diacide/diamine compris entre 1,005 et 1,2, de préférence entre 1,01 et 1,2. Les installations de condensation comprennent de préférence un réacteur de polymérisation agité.

On décrit en premier lieu le fonctionnement du procédé en régime permanent.

Le rapport molaire diacide/diamine du précurseur riche en groupements terminaux diacides est de préférence compris entre 0,95 et 0,99. Le rapport molaire diacide/diamine du précurseur riche en groupements terminaux amines est de préférence compris entre 1,01 et 1,05. Les installations peuvent comprendre des dispositifs de flashage et de finition en aval du réacteur de polymérisation.

De préférence les mélanges constituant les précurseurs sont anhydres. Par mélange anhydre il faut comprendre des mélanges qui peuvent contenir jusqu'à 10 % en poids d'eau. Le terme anhydre est utilisé dans la présente description en opposition au procédé conventionnel qui utilise une solution aqueuse de sel NYLON en régime permanent.

Les mélanges constituant les deux flux de précurseurs peuvent être préparés dans des réacteurs, à une température avantageusement comprise entre 100 et 260°C sous pression au moins légèrement supérieure à la pression atmosphérique, de préférence à température comprise entre 220°C et 260°C à pression comprise 5 et 20 bars. Les réacteurs où sont préparés les précurseurs ainsi que le réacteur de polymérisation peuvent par exemple être des réacteurs à agitation mécanique ou des réacteurs à recirculation externe. Dans ce dernier cas, l'alimentation en précurseurs et/ou le soutirage du produit et/ou le chauffage peuvent avantageusement être réalisés dans la boucle de recirculation. Le chauffage des réacteurs peut être réalisé à l'aide d'un dispositif de double enveloppe et/ou d'un serpentin interne. Les réacteurs peuvent de plus être ouverts aux gaz.

Selon une modalité particulière, les précurseurs sont préparés par mélange à l'état liquide d'un diacide avec la diamine, en présence d'une faible quantité d'eau, avec chauffage à température modérée pour un précurseur riche en groupements terminaux diacides ou diamines.

Selon une autre modalité particulière, les précurseurs sont chauffés à une température plus élevée avec élimination d'eau pour obtenir des produits de condensation, oligomères ou prépolymères, à terminaisons acides pour le premier précurseur et terminaisons amines pour le second précurseur. Pour la fabrication de polyhexaméthylène-adipamide, la température est avantageusement comprise entre 180°C et 250°C, sous pression comprise entre 5 et 20 bars. Le degré de polycondensation des précurseurs est de préférence inférieur à 20. Les précurseurs sont ensuite mélangés l'un à l'autre et introduits dans le réacteur de polymérisation, où le degré de polymérisation est augmenté.

Selon une caractéristique préférée, la condensation réalisée dans le réacteur de polymérisation est mise en oeuvre sous une pression autogène ou régulée pour éviter toute perte en diamine ou au moins les réduire au minimum. Selon une autre caractéristique les installations peuvent comprendre des moyens de récupération de la diamine éventuellement volatilisée en même temps que de l'eau, et des moyens d'introduction de la diamine récupérée dans l'installation de polymérisation.

Selon une nouvelle caractéristique de l'invention, la polymérisation réalisée dans le réacteur de polymérisation est mise en oeuvre sous une pression autogène ou régulée pour éviter toute perte en diamine ou au moins les réduire au minimum.

Le procédé peut être utilisé pour la fabrication de poly(hexaméthylène adipamide), à partir d'acide adipique comme monomère diacide et d'hexaméthylène diamine comme monomère diamine.

Dans un mode de réalisation préférentiel, on fabrique du poly(hexaméthylène adipamide) (polyamide 6,6), et les précurseurs sont préparés à partir d'un mélange acide adipique (AdOH) / hexaméthylène diamine (HMD) de composition voisine de l'eutectique, c'est-à-dire 19 % en poids de HMD et 81 % en poids de AdOH. Ce mélange eutectique a un point de fusion voisin de 100°C.

Le mélange eutectique est introduit dans deux réacteurs dans lesquels sont introduits de l'hexaméthylène diamine pour obtenir respectivement un premier mélange riche en diacide (rapport diacide / diamine compris entre 1,01 et 1,2) et un second mélange riche en diamine (rapport diacide / diamine compris entre 0,8 et 0,99). Le procédé de préparation du mélange eutectique peut être analogue à celui décrit dans le brevet US 4.131.712 pour la préparation de mélanges riches en acide.

Le mélange eutectique est avantageusement préparé dans des installations en amont des installations de préparation des précurseurs. Il peut par exemple s'agir d'une installation munie de moyens d'agitation, de chauffage, pouvant être mise sous pression. Une même installation de préparation du mélange eutectique peut servir à alimenter les deux installations (généralement des réacteurs) de préparation des précurseurs.

Avantageusement, les rapports diacide/diamine des précurseurs sont contrôlés par des analyses chimiques ou potentiométriques. Dans un mode de réalisation particulièrement préféré, ces rapports diacide / diamine sont déterminés par une analyse spectrométrique Proche Infra Rouge.

Le mélange eutectique peut être préparé par mélange d'acide adipique, sous forme solide ou fondue, et d'hexaméthylène diamine, sous forme pure ou en solution concentrée, le mélange étant réalisé à des températures supérieures à 100°C, sous pression au moins légèrement supérieure à la pression atmosphérique.

La température de préparation des précurseurs est avantageusement supérieure à 100°C pour obtenir une réaction d'amidification et donc un produit partiellement condensé, à terminaison acide ou amine selon le précurseur.

Les flux de précurseurs sont rassemblés et introduits dans un réacteur de polymérisation agité. Il est possible de prévoir des mélangeurs statiques dans le conduit d'alimentation du réacteur de polymérisation et/ou un réacteur de prémélange.

Le débit de chaque flux de précurseur est déterminé pour obtenir un rapport entre les fonctions amines et acides le plus proche de la valeur désirée. Le débit des flux est contrôlé et ajusté par asservissement au résultat de l'analyse du rapport entre les fonctions acide et amine présentes soit dans la masse réactionnelle formée par le mélange des deux flux, par exemple dans le réacteur de prémélange ou après les mélangeurs statiques, soit dans la masse réactionnelle présente dans le réacteur de polymérisation ou en sortie dudit réacteur de polymérisation.

La régulation des débits d'entrée dans les différents réacteurs peut être mise en oeuvre par l'intermédiaire des pompes ou de vannes de détente.

Pour obtenir une régulation efficace, l'analyse des fonctions acides et amines est réalisée en continu par analyse spectrométrique Proche Infra Rouge. L'asservissement peut également être lié à la mesure de rapport de stoechiométrie dans les deux flux de précurseurs.

On décrit à présent les étapes de démarrage précédant le fonctionnement en régime permanent pour le premier mode de réalisation de l'invention décrit ci-dessus.

On alimente en une solution aqueuse comprenant des ions dicarboxylates et des ions diammoniums le réacteur de polymérisation et éventuellement le dispositif de mélange, les installations de préparation des précurseurs, et de préparation d'un mélange eutectique. Il s'agit de préférence d'une solution d'hexaméthylène diammonium de concentration comprise entre 40 et 65% en poids. Durant l'alimentation en solution de sel, une vanne de récupération des produits, en aval du réacteur de polymérisation est de préférence fermée.

Au cours d'une deuxième étape on chauffe la solution de sel dans le réacteur de polymérisation à une température supérieure à 100°C, sous une pression de préférence comprise entre 1 et 10 bars.

On alimente le réacteur de polymérisation en mélange de précurseurs. Dans une première variante les précurseurs sont déjà préparés, dans les proportions respectives du régime permanent. Dans une deuxième variante les précurseurs ne sont pas encore préparés au démarrage des installations, les installations de préparations de ceux-ci contenant une solution de sel. Dans la deuxième variante on atteint progressivement les proportions du régime permanent en monomères acides et respectivement amines pour les précurseurs, par alimentation de diacides ou de mélange eutectique et/ou de diamine dans les installations de préparations de précurseurs. Le mélange des précurseurs passe alors progressivement d'un mélange obtenu à partir de solutions de sel, à un mélange obtenu à partir de précurseurs respectivement riches en groupement terminaux acides et amines.

On récupère le produit de condensation issu du réacteur de polymérisation et on active le système d'analyse et d'asservissement.

Pour la deuxième variante, la température est avantageusement comprise entre 100 et 180°C, avec une pression comprise entre 1 et 10 bars, de manière à ce que la solution de sel soit liquide. Il peut se produire un début de condensation dans ces installations.

Lors de la mise en oeuvre de la deuxième variante, les installations de préparation des précurseurs contiennent en début de procédé une solution de sel, les rapports diacide/diamine étant sensiblement égaux à 1. Ces rapports sont modifiés par alimentation dans les installations de quantités différentes (débits différents) de composés riches en diamines et de composés riches en diacides, dans chacune des installations de préparation. Comme exposé plus haut, un composé riche en diacides préféré pour la préparation des précurseurs est un mélange eutectique.

Le mélange eutectique peut être préparé dans des installations en amont des installations de préparation des précurseurs. L'installation est par exemple une cuve munie de moyens de mélangeage et de chauffage. Selon une caractéristique préférentielle on alimente en premier lieu l'installation de préparation du mélange eutectique en une solution aqueuse de sel. On chauffe le mélange à une température comprise entre 100 et 150°C. On alimente l'installation en diacide, par exemple sous forme solide, et éventuellement en diamine, avec des débits d'alimentation correspondant à la stoechiométrie du mélange eutectique, et on soutire le produit obtenu. Le temps de résidence dans l'installation est de préférence choisi de manière à ce que le diacide, s'il est sous forme solide ait le temps de fondre et/ou de se dissoudre. La température dans l'installation est supérieure à la température de fusion du mélange. On précise que le mélange peut contenir de l'eau, soit ajoutée en continu, en quantité de préférence inférieure à 10% en poids, soit issue de l'alimentation initiale en solution de sel. L'eau issue de l'alimentation initiale en solution de sel, est éliminée, soit par évaporation, avant l'alimentation en diacide, soit par épuisement, lors du soutirage du mélange préparé, au démarrage du procédé.

Selon un second mode de réalisation de l'invention, le précurseur riche en groupements terminaux acides est un diacide carboxylique en phase fondue, le précurseur riche en groupements terminaux amines est une diamine en phase fondue, ou en solution concentrée. Les installations de condensation comprennent de préférence deux réacteurs, un réacteur non ouvert aux gaz et un réacteur ouvert aux gaz. Les installations comprennent une installation de mélange, par exemple une zone de mélangeurs statiques.

En régime permanent, les deux flux sont mélangés de façon à ce que les quantités de diacides et de diamines soient équivalentes. Les installations peuvent comprendre des dispositifs destinés à s'assurer que le diacide n'est pas en contact de l'oxygène. Dans le cadre de la fabrication de polyamide 6,6, le diacide est de l'acide adipique de préférence introduit à une température proche de 170°C, et la diamine est l'hexaméthylène diamine, de préférence introduite à une température proche de 70°C, éventuellement en solution concentrée dans de l'eau (de préférence moins de 10% d'eau).

La température de condensation dans le réacteur non ouvert aux gaz est de préférence comprise entre 220° et 300°C, sous une pression comprise entre 5 et 20 bars. Le temps de résidence du flux de matière dans le réacteur (le flux entrant dans le réacteur étant constitué du mélange) est avantageusement compris entre 1 minute et 30 minutes.

Selon une caractéristique avantageuse, la condensation dans le réacteur est telle qu'il ne reste pas plus de 10 % de monomères libres dans le flux sortant de ce réacteur.

Le flux issu du réacteur non ouvert aux gaz peut ensuite être introduit dans un réacteur ouvert aux gaz. Le temps de séjour de la matière dans ce réacteur est avantageusement compris entre 1 minute et 60 minutes. L'ouverture aux gaz de ce réacteur permet à l'eau issue de la réaction de condensation de se volatiliser. Le degré de polymérisation augmente également dans ce réacteur.

On récupère un flux du produit de condensation. Selon un mode préférentiel une partie du flux produit est réintroduit dans le réacteur non ouvert aux gaz, aux températures et pressions mentionnées ci-dessus, en présence du mélange des précurseurs. Cette recirculation du produit est de préférence telle que le flux de recirculation est entre dix et vingt fois supérieur au flux de mélange introduit dans le réacteur non ouvert aux gaz. Au cours de cette opération, il y a condensation à partir du sel. On ouvre une vanne de récupération. Le degré de polycondensation au moment de l'ouverture de cette vanne est avantageusement supérieur à 10, de préférence supérieur à 20.

Cette recirculation peut permettre d'obtenir des degrés de polycondensation suffisamment importants, de produire une agitation et de chauffer la matière.

Le flux issu du réacteur ouvert aux gaz est analysé afin de déterminer les quantités de groupements terminaux acides et amines. On utilise avantageusement pour cela une spectrométrie PIR. On asservit les flux de précurseurs, diacide fondu ou diamine, à l'analyse des quantités de groupements terminaux et/ou à leur rapport. Le rapport entre les groupements terminaux acides et les groupements terminaux amines est de préférence proche de 1, avec avantageusement une précision supérieure à 0,5. Les analyses peuvent également être réalisées sur un flux de recirculation.

Le flux de produit récupéré peut être avantageusement introduit dans un dispositif de flashage puis un dispositif de finition, permettant d'augmenter encore le degré de polymérisation.

On précise que le réacteur ouvert aux gaz peut être pourvu de moyens de récupération des monomères diamines éventuellement volatilisés avec l'eau. Ces monomères peuvent être réintroduits dans les installations.

On décrit à présent les étapes de démarrage précédent le régime permanent décrit ci-dessus.

On alimente en premier lieu les installations de condensation, et éventuellement mélange, en une solution aqueuse d'un sel diacide/diamine, de préférence une solution aqueuse d'hexaméthylène diammonium de 40 % à 65 % en poids. Cette opération constitue une première étape.

Au cours d'une deuxième étape on chauffe la solution comprise dans l'installation de condensation, par exemple un réacteur non ouvert aux gaz, à une température supérieure à 180°C à pression supérieure à 5 bars, de préférence à une température supérieure à 220°C et à une pression comprise entre 5 et 20 bars. On impose éventuellement une recirculation de la solution. La solution de sel comprise dans l'installation de mélange est avantageusement chauffée à une température de 180°C.

On alimente l'installation de mélange en flux de précurseurs, avec des débits tels que les proportions introduites de monomères soient sensiblement stoechiométriques. On active le système d'analyse et d'asservissement. Le flux de mélange est alimenté dans l'installation de condensation, par exemple le réacteur non ouvert aux gaz, et on récupère un flux de produit de condensation. La matière issue du mélange des précurseurs remplace donc dans les installations la matière issue de la solution de sel N. L'eau est progressivement éliminée soit dans un réacteur ouvert au gaz, soit par épuisement avec le produit récupéré.

On atteint ainsi progressivement le régime permanent.

D'autres avantages ou détails de l'invention apparaîtront plus clairement au vu des exemples donnés ci-dessous uniquement à titre indicatif et aux descriptions détaillées réalisées en référence aux figures qui représentent un schéma synoptique de parties du procédés selon l'invention.

### EXEMPLE 1 : exemple de fonctionnement du procédé et de son démarrage

On décrit d'abord dans cet exemple le procédé en régime permanent.

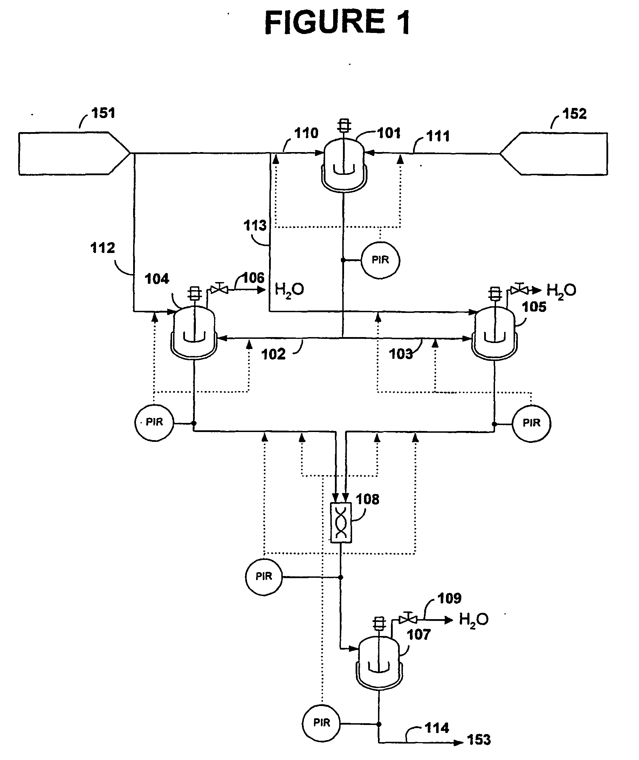

Selon le schéma représenté dans la figure 1, dans un premier réacteur 101 agité sont alimentés en continu, respectivement par les conduits 110, 111 une solution aqueuse concentrée d'hexaméthylènediamine de concentration massique en eau égale à 10%, disponible à partir d'une source 151, et de l'acide adipique en poudre, disponible à partir d'une source 152, pour obtenir un mélange dont le rapport pondéral est de 81 % en monomère diacide et 19 % de monomère diamine. Ce mélange M1 peut contenir une faible quantité d'eau, par exemple de l'ordre de 7 % en poids par rapport au mélange monomère diacide/monomère diamine. Le mélange est maintenu à une température d'environ 126°C.

Le mélange M1 est alimenté par soutirage du réacteur 101 par les conduits 102 et 103 respectivement dans deux réacteurs agités 104 et 105.

Toutefois, dans un mode de réalisation non illustré, le mélange M1 du réacteur 101 peut être alimenté dans un stockeur puis de celui-ci alimenté dans les réacteurs 104 et 105 pour permettre une conduite plus souple du procédé.

Dans l'exemple illustré, le réacteur 104 est maintenu à 228°C sous une pression de 15 bars, le flux de mélange M1 alimenté par la conduite 102 est de 41 kg/h. Dans ce réacteur 104, une solution d'hexaméthylène diamine (HMD) contenant 10 % d'eau est alimentée par le conduit 112 selon un débit contrôlé pour obtenir dans le réacteur 104 un mélange M2 comprenant un rapport des fonctions acides par rapport aux fonctions amines égal à 1,03.

Le rapport acide/amine est mesuré en continu dans le réacteur 104 ou, comme illustré en sortie de ce réacteur, par une méthode d'analyse Proche Infra Rouge décrite ci-dessous. Le résultat de cette analyse est traité par un système d'asservissement qui commande les débits des flux de mélange M1 et de solution de HMD alimentés dans le réacteur 104.

Sur la figure 1 les lignes en pointillés représentent d'une part les asservissements des flux aux mesures par proche infra rouge et d'autre part, les analyses des compositions des flux par proche infra rouge.

Le temps de séjour du mélange dans le réacteur 104 est d'environ 48 minutes. Le réacteur 104 comprend une sortie 106 permettant d'évacuer l'eau contenue et/ou formée dans le réacteur. Le débit d'évacuation de cette eau sous forme de vapeur est de 7,6 kg/h.
Le mélange M2 soutiré du réacteur 104 est un mélange acide adipique / HMD préamidifié riche en fonctions acides.

Un second mélange M3 acide adipique / HMD préamidifié est produit dans le réacteur 105, de manière analogue à la fabrication du mélange M2 dans le réacteur 104. Toutefois, le débit des flux de mélange M1 et de solution d'hexaméthylène diamine alimentée par le conduit 113 sont déterminés et contrôlés pour obtenir dans le réacteur 105 un mélange présentant un rapport des fonctions acides par rapport aux fonctions amines égal à 0,98.

Dans l'exemple illustré, les conditions de température et de pression sont identiques à celles du réacteur 104.

Comme pour la fabrication du mélange M2, les débits des flux de mélange M1 et de HMD sont asservis au résultat de la mesure en continu du rapport fonction acide/ fonction amine dans le mélange M3, par une méthode d'analyse par Proche Infra Rouge décrite ci-dessous.

Les deux mélanges M2 et M3 issus respectivement, des réacteurs 104 et 105 sont introduits dans un réacteur de polycondensation 107, maintenu à une température de 248°C sous une pression de 17,5 bars absolus.

Les deux flux de mélange M2 et M3 sont alimentés dans un prémélangeur 108 constitué, dans l'exemple, d'un ensemble de mélangeurs statiques disposés dans un conduit. On peut utiliser d'autres moyens de mélange tels qu'une cuve agitée.

Les débits des flux de mélanges M2 et M3 sont contrôlés pour obtenir dans le réacteur 107 un mélange présentant un rapport fonctions acides / fonctions amines déterminé en fonction des caractéristiques du polyamide à fabriquer.

Ainsi, dans l'exemple illustré, ces débits sont,déterminés pour obtenir un mélange dans le réacteur 107 présentant une différence entre les concentrations en fonctions acides et amines (GTC - GTA) en sortie du réacteur 107 voisine de 50 meq/kg.

Cette différence de concentrations, ou le rapport fonctions acides/fonctions amines, est mesurée en continu par une méthode d'analyse spectrométrique dans le Proche Infra Rouge, les débits des flux de mélange M2 et M3 alimentés dans le prémélangeur 108 étant asservis à cette mesure pour maintenir la valeur de différence entre deux valeurs de consigne.

Le temps de séjour du mélange ou prépolymère dans le réacteur 107 est voisin de 30 minutes.

Les réacteurs 104, 105 et 107 sont équipés d'une vanne de détente 106, 109 pour permettre d'évacuer une partie de l'eau formée par la réaction d'amidification. Le flux de vapeur d'eau évacué par la vanne 109 de détente est égal à 4,5 kg/h en moyenne. L'analyse et le contrôle de la composition du flux 114 soutiré du réacteur 107 permet de contrôler le degré d'avancement de la réaction d'amidification et donc le degré de polycondensation du prépolymère soutiré du réacteur 107.

Le débit moyen de soutirage du prépolymère du réacteur 107 par la conduite 194 est de 102 kg/h. Le prépolymère ainsi récupéré possède une masse molaire moyenne en nombre voisine de 3800 et contient environ 5% d'eau. Son indice de viscosité mesuré dans l'acide formique dilué conformément aux conditions et recommandations de la norme internationale ISO 307-1984 est de 33,5 mUg..

Le procédé illustré permet de produire, en continu, un prépolymère 153 en sortie du réacteur 107 présentant une concentration en groupes terminaux amines (GTA) égale en moyenne, à 238,2 meq/kg, et une concentration en groupes terminaux acides (GTC) égale en moyenne, à 289,5 meq/kg, c'est-à-dire une différence entre les concentrations en fonction acide et fonction amine de 51,3 meq/kg, pour une valeur de consigne et désirée de 50 meq/kg.

Le prépolymère ainsi produit est transformé en polyamide de masse molaire désirée et compatible avec les utilisations usuelles par addition dans un flux de fabrication d'un polyamide provenant d'un procédé de fabrication de polyamide 6,6 à partir de sel adipate d'hexaméthylène diamine.

Les procédés continus et usuels de fabrication de PA 6,6 décrits par exemple dans l'ouvrage "Polymerization processes" édition Schildknecht (Wiley interscience, 1977) pp .424 à 467 (chapitre 12 "Preparation of 6,6-Nylon and related polyamides" par Donald B. JACOBS et Joseph ZIMMERMAN), comprennent dans l'étape de finition du polymère, un flasheur, un séparateur vapeur/prépolymère et un finisseur. Le flux de prépolymère obtenu par le procédé de l'invention est ajouté au flux conventionnel de polyamide en amont du flasheur.

L'addition de ce flux de polyamide sortant du procédé conforme à l'invention ne perturbe pas la qualité et les propriétés du polyamide obtenu en sortie des étapes de finition. Ces propriétés sont identiques à celles du polyamide fabriqué sans ce flux additionnel.

Le procédé de l'invention permet donc de fabriquer un polyamide compatible pour être engagé comme matière première dans les utilisations usuelles, telles que fabrication de fils, fibres, films ou fabrication de pièces moulées.

On détaille à présent l'analyse en ligne par spectrométrie Proche Infra Rouge.

La méthode de mesure d'analyse spectrométrique dans le domaine spectral du proche infra rouge consiste à réaliser sur le mélange réactionnel, une mesure en continu par transmission : l'onde lumineuse est émise par la lampe du spectromètre, véhiculée par fibre optique monobrin jusqu'à la sonde émettrice directement en contact avec le mélange réactionnel. L'information lumineuse est partiellement absorbée par le produit traversé puis captée par la sonde réceptrice rigoureusement alignée avec la sonde émettrice, véhiculée par une seconde fibre optique monobrin puis recueillie par le détecteur du spectromètre. Le logiciel d'acquisition des spectres reconstitue l'ensemble du spectre en transmission pour le transformer en spectre en absorbance. L'acquisition des spectres se fait ainsi dans une gamme de nombres d'onde de 4600 à 9000 cm⁻¹ avec une résolution de 16 cm⁻¹ : chaque spectre résulte de la moyenne de 32 scans réalisés à la vitesse moyenne de 128 scans par minute.

L'information spectrale recueillie par analyse en continu est transcrite en concentration en groupements terminaux acide et amine par kg de produit sec (respectivement GTC et GTA) ainsi qu'en écart GTC-GTA à partir de modèles élaborés par étalonnage avec des échantillons analysés par des méthodes d'analyse potentiométrique, par exemple décrite dans "Encyclopedia of Industrial Chemical Analysis", 1973, volume 17, page 293.

L'ensemble du dispositif de mesure proche infra rouge est dimensionné de manière à résister à une pression interne de 150 bars et une température de 300°C. L'ensemble se compose d'une cellule en acier inox APX4 fournie par la société Ateliers MEcaniques Péagois (AMEP), Péage de Roussillon, France. Le corps de cellule est chauffé électriquement, le chauffage étant régulé par une mesure de température dans la masse métallique et dans le polymère. Une alarme sur l'écart de température permet de détecter une défection du dispositif de chauffe.

La conduite de circulation du produit analysé est cylindrique, de diamètre 1 cm. Ce flux est intercepté perpendiculairement par les sondes directement vissées sur le corps de la cellule.

Les sondes utilisées sont du type FCP-080 Cross Line Probe fournies par Axiom Analytical Incorporated, Irvine, Californie. Ces sondes sont vissées dans les porte-sonde de manière à réaliser une étanchéité conique métal-métal, le saphir d'environ 8 mm affleurant à l'extrémité du porte-sonde. L'écartement entre la sonde émettrice et la sonde réceptrice se fait ainsi par un réglage symétrique par vissage des deux porte-sonde en vis-à-vis : il est fixé à 4 mm et reste constant lors des phases de calibration et de prédiction en utilisation continue. Les sondes sont connectées au spectromètre via une fibre optique mesurant jusqu'à 50 mètres. Le spectromètre lui-même est relié à un ordinateur en salle de conduite qui reporte en temps réel le résultat de l'analyse on-line.

La mesure réalisée sur les mélanges M2 et M3 en sortie des réacteurs 104 et 105 présente une erreur standard de prédiction de 10,1 meq/kg pour le GTA, 13,0 meq/kg pour le GTC et de 12,7 meq/kg pour la différence GTC-GTA avec des coefficients de corrélation supérieurs à 0,99.

Le degré de précision atteint par cette analyse statistique des spectres proche infra rouge permet un ajustement du rapport entre les groupements terminaux acides et amines dans les mélanges M2 et M3 par asservissement des débits des fluides alimentés respectivement dans les réacteurs 104 et 105.

La mesure réalisée en sortie du réacteur 107 présente une erreur standard de prédiction de 4,6 meq/kg pour le GTA, 5,1 meq/kg pour le GTC et de 4,7 meq/kg pour la différence GTC-GTA avec des coefficients de corrélation de 0,990 pour le GTA, 0,991 pour le GTC et 0,995 pour la différence GTC-GTA.

Le degré de précision atteint par cette analyse statistique des spectres proche infra rouge permet également un ajustement du rapport entre groupements terminaux acides et amines par asservissement des flux des mélanges M2 et M3 alimentés dans le prémélangeur ou le réacteur 107.

De même, cette méthode d'analyse par spectrométrie dans le proche infra rouge permet également de déterminer la composition du mélange M1 et d'asservir les débits des monomères alimentés dans le réacteur 101.

L'emplacement des sondes dans le procédé peut être différent selon la disposition des réacteurs ou la présence de réacteurs ou unités de stockage.

Le nombre de points d'analyse sur le procédé peut varier de un à plusieurs. Ainsi, il est possible d'avoir uniquement un contrôle de la composition du prépolymère en sortie du réacteur 107 et d'asservir à cette mesure les débits des mélanges M2 et M3 et/ou les débits d'alimentation de la solution de HMD et du mélange M1 dans les réacteurs 104 et 105, sans pour cela sortir du cadre de l'invention. Toutefois, pour un meilleur contrôle du procédé, il est préférable d'avoir un contrôle de la composition de chacun des mélanges M1 à M4 et d'asservir les débits d'alimentation des réactifs dans chaque réacteur de fabrication de ces mélanges.

Un exemple de système de contrôle et d'asservissement des débits d'alimentation des flux de mélanges dans les différents réacteurs est illustré par des lignes en pointillés dans la figure 1.

Comme indiqué précédemment, le procédé de l'invention s'applique préférentiellement à la fabrication du PA 6,6, mais il peut être également utilisé pour la fabrication d'autres polyamides obtenus à partir de monomères diacides et diamines, et surtout pour la fabrication de copolyamides comme les copolyamides PA 6,6/6.

On décrit à présent les opérations de démarrage, et les états transitoires des produits et paramètres de procédé avant obtention du régime permanent décrit ci-dessus.

Le démarrage met en oeuvre du Sel N concentré à 62%. Il est préparé à partir d'une source d'eau 254, d'acide adipique 252, et d'hexaméthylènediamine 251.

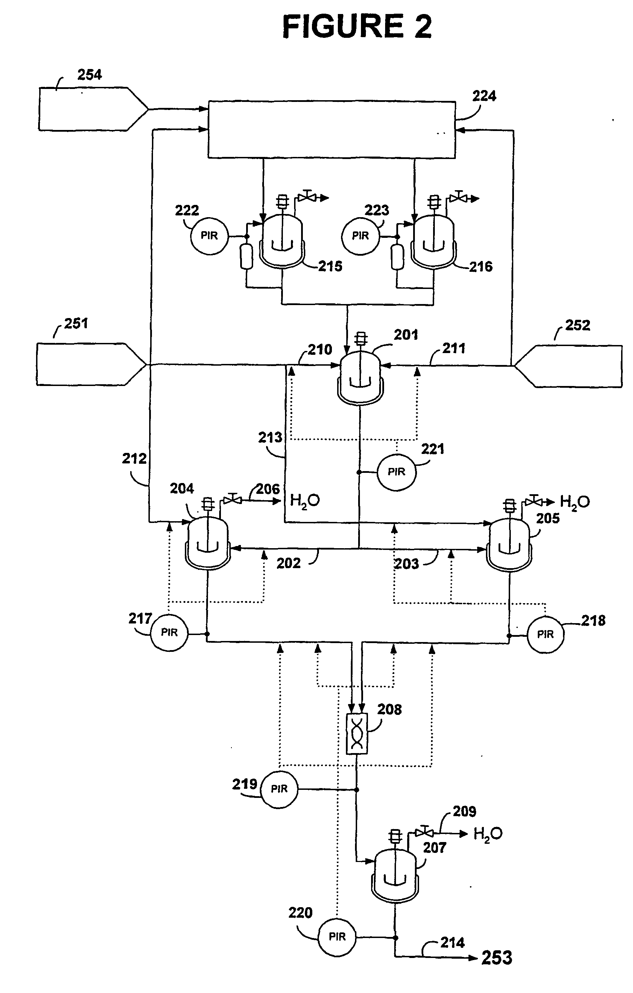

Dans l'exemple illustré, dont la description détaillée est réalisée en référence à la figure 2 qui représente un schéma synoptique d'une partie du procédé de l'invention, la solution de Sel N concentré à 62% est fabriquée dans l'atelier 224. Celle-ci est alimentée en continu par au moins deux réservoirs tampons du type 215 et 216 se vidant alternativement par respiration entre un niveau maximal et un niveau minimal. Ces réservoirs inertés à l'azote sont munis d'un mode d'agitation par recirculation externe afin d'en homogénéiser le contenu et d'y contrôler le pH et la concentration avant alimentation de l'unité de polycondensation.

### Etat 1 : remplissage des installations

Après les tests en eau usuels précédant le démarrage de l'installation de polycondensation, l'alimentation en eau est remplacée par une alimentation d'une solution de Sel N 62% introduite en continu à 109°C, à un débit de 280 L/h (=300 kg/h), dans le réacteur 201 puis dans l'ensemble de la cascade de réacteurs agités 204, 205 et 208. Les vannes de sortie des différents réacteurs sont dans un premier temps fermées pour permettre leur remplissage puis ouvertes. Les installations comprennent des moyens de régulation des niveaux. Le flux de solution sortant est réintroduit dans les installations. Les réacteurs fonctionnent à la température d'alimentation du Sel N 62% sous une pression autogène quasi atmosphérique de 1,05 bars pour éviter l'entrée d'oxygène.

### Etat 2: mise en régime des installations dans l'état futur du réacteur 201 en régime permanent

Après stabilisation des niveaux lors de l'étape précédente, le débit d'alimentation continue en Sel N 62% est diminué à 110 L/h (~ 120 kg/h) de manière à permettre la concentration du Sel N 62% à 75% à l'aide de surfaces d'échange de chaleur disposées dans chacun des réacteurs agités. Pour cela, les consignes de température des réacteurs 201, 204, 205 et 207 sont fixées à 115°C. La pression autogène correspondante est ensuite régulée à 1,05 bars.

### Etat 3 : mise en régime des réacteurs 204, 205, 207 dans l'état futur des réacteurs 204 et 205 en régime permanent

Après stabilisation des niveaux et températures lors de l'étape précédente, les consignes de température sont réglées sur 180°C dans les réacteurs 204, 205 et 207. La pression autogène est ensuite régulée à 5 bars. La concentration du Sel N dans le réacteur 207 est de 88%. Cette étape est aussitôt enchaînée avec la suivante dès que la température de 180°C est atteinte dans le réacteur 207.

### Etat 4 : mise en régime du réacteur 207 dans l'état final des réacteurs 204 et 205 en régime permanent

Une fois la consigne de température de 180°C atteinte dans le réacteur 207, celle-ci y est réglée sur 227°C. La pression autogène est ensuite régulée à 15 bars.

### Etat 5 : mise en régime des réacteurs 204. 205 et 207 dans leur état final (sous alimentation en solution de sel N)

On règle les consignes de température à 228, 226 et 248°C respectivement pour les réacteurs 204, 205 et 207. Les pressions autogènes sont ensuite régulées à 15 bars dans les réacteurs 204 et 205 et 17,5 bars dans le réacteur 207. La masse molaire moyenne en nombre mesurée sur un extrait sec du flux sortant du réacteur 207 est d'environ 4000 g/mol. Ce flux alimente en continu l'aval du procédé de polycondensation constitué par une association en série d'un flasheur, d'un séparateur vapeur/prépolymère et d'un finisseur. Le polymère obtenu en sortie du finisseur présente un indice de viscosité mesuré dans l'acide formique dilué conformément aux conditions et recommandations de la norme internationale ISO 307-1984 de 135 mUg.

Le produit sortant de la cascade de réacteurs agités est du prépolymère qui conduit, après montée en masse, à un polymère d'indice de viscosité convenant à la plupart des applications de transformation, soit directement en sortie du finisseur, soit après granulation puis refusion.

Cette étape est avantageusement utilisée pour la calibration des points de mesure de la stoechiométrie par proche infra rouge telle qu'une description en est faite dans l'exemple 2.

### Etat 6 : état final correspondant au régime permanent

Lorsque l'ensemble des points de mesure proche infra rouge a été étalonné et que le spectromètre a ainsi été calibré, de manière précise et fiable pour permettre la conduite du procédé d'amidification directe, l'alimentation de Sel N 62% à l'entrée du réacteur 1 est remplacée par une alimentation continue à 90 kg/h du mélange M1 préalablement décrit.

La régulation de la stoechiométrie à partir des mesures en ligne par proche infra rouge est activée sur l'ensemble des réacteurs de la cascade : le couplage entre la régulation de la stoechiométrie du flux de sortie et la régulation de.niveau de chacun des réacteurs 201, 204, 205 et 207 permet d'ajuster les débits des deux flux d'alimentations de chacun des réacteurs, l'un de ces flux étant systématiquement riche en fonctions amines et l'autre riche en fonctions acides.

Ce mode de démarrage du procédé d'amidification directe à partir d'une solution aqueuse de monomères permet d'atteindre le régime permanent décrit au début de cet exemple 1 en permettant l'étalonnage des points de mesure de la stoechiométrie par proche infra rouge et en minimisant, dans les phases d'étalonnage et de calibration, les risques de production de polymère hors spécifications.

### EXEMPLE 2 : Exemple d'une procédure d'étalonnage d'un spectromètre proche infra rouge pour la mise en oeuvre du procédé.

On décrit dans cet exemple des dispositifs et procédures relatifs à l'analyse par proche infra rouge, et à l'étalonnage du spectromètre (calibration).

### Première boucle de dérivation

Bien que la mesure puisse être effectuée sur la conduite principale de circulation du produit, la mesure est effectuée sur une boucle de dérivation.

### Seconde boucle de dérivation

On utilise une deuxième boucle de dérivation, fermée, relié à la première boucle. Cette boucle permet d'étalonner et de calibrer le spectromètre Proche Infra-Rouge.

### Procédure d'étalonnage

On récupère dans la deuxième boucle de dérivation le produit issu de la condensation à partir du sel N, dont les caractéristiques sont connues. La deuxième boucle de dérivation étant reliée au spectromètre, on calibre ce dernier dans la gamme désirée à l'aide de mesures de références réalisées sur des échantillons prélevés dans la boucle, suite à différents ajouts dosés de quantités connues d'acide adipique et/ou d'hexaméthylène diamine (méthode des ajouts dosés) dans la boucle.

### EXEMPLE 3

Autre mode de mise en oeuvre d'un procédé selon l'invention.

On décrit d'abord les installations et le fonctionnement en régime permanent.

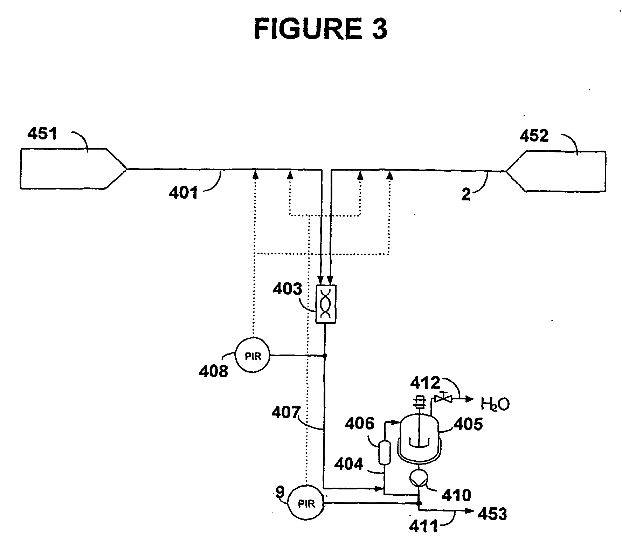

Selon le schéma représenté dans la figure 3, dans une zone constituée d'une association en série de mélangeurs statiques 403 sont alimentés en continu, respectivement par les conduits 401 et 402, un flux d'hexaméthylène diamine fondu, provenant d'une source 451, et un flux d'acide adipique désoxygéné fondu à une température de 250°C sous une pression d'environ 15 bars, provenant d'une source 452. Le mélange obtenu est noté M5. La stoechiométrie du mélange réactionnel est mesurée en continu par proche infra rouge dans le flux 407 sortant de la zone de mélange 403 : les débits des flux 401 et 402 sont alors ajustés de façon à réguler la valeur de consigne du rapport molaire du point de mesure par proche infra rouge 408.

Le mélange M5 est introduit dans la boucle de recirculation d'un réacteur agité 405 : celle-ci est munie d'un échangeur de chaleur 406 et assure par la pompe 410 un débit de recirculation 20 fois supérieur au débit d'alimentation du mélange M5. Le réacteur 405 fonctionne à une température de 255°C sous une pression régulée de 15 bars. Il est muni d'un dispositif externe de récupération partielle des pertes en diamine volatile entraînée par la vapeur d'eau non représenté sur la figure 3. Le niveau de remplissage est tel que le temps de séjour estimé est environ 20 minutes.

Une fraction du flux sortant du réacteur 405 est soutirée par la conduite 411. Un point de mesure en continu par proche infra rouge situé dans cette conduite 411 permet de contrôler la stoechiométrie et l'avancement chimique du produit. Au besoin, il affecte une nouvelle valeur de consigne au point de mesure proche infra rouge 408 situé sur la conduite 407.

Le prépolymère 453 ainsi produit est transformé en polyamide de masse molaire désirée et compatible avec les utilisations usuelles par addition dans un flux de fabrication d'un polyamide provenant d'un procédé de fabrication de polyamide 6,6 à partir de sel adipate d'hexaméthylène diamine.

Les procédés continus et usuels de fabrication de PA 6,6 décrits par exemple dans l'ouvrage "Polymerisation processes" édition Schildknecht (Wiley interscience, 1977) pp.424 à 467 (chapitre 12 "Preparation of 6,6-Nylon and related polyamides" par Donald B. JACOBS et Joseph ZIMMERMAN), comprennent dans l'étape de finition du polymère, un flasheur, un séparateur vapeur/prépolymère et un finisseur. Le flux de prépolymère obtenu par le procédé de l'invention est ajouté au flux conventionnel de polyamide en amont du flasheur.

Une alternative peut également consister à faire passer le mélange réactionnel dans un flasheur, un finisseur qualifié de basse viscosité d'où le prépolymère sort avec un indice de viscosité, mesuré dans l'acide formique dilué conformément aux conditions et recommandations de la norme internationale ISO 307-1977, aux environs de 60 mL/g de façon à pouvoir être granulé. Un séchage s'accompagnant d'une post-condensation à l'état solide permet alors d'atteindre le niveau de viscosité requis pour le polymère.

La méthode de mesure d'analyse spectrométrique dans le domaine spectral du Proche Infra-Rouge est réalisée d'une manière tout à fait similaire à la description qui en est faite dans l'exemple 1. Cette mesure en ligne est mise en oeuvre à l'ensemble des points pertinents de l'installation et plus particulièrement aux points 408. et 409 représentés sur la figure 3.

On décrit à présent les opérations de démarrage, et les états transitoires des produits et paramètres de procédé avant obtention du régime permanent décrit ci-dessus.

Le démarrage met en oeuvre du Sel N concentré à 62%. Il est préparé à partir d'une source d'eau 554, d'acide adipique 552, et d'hexaméthylènediamine 551.

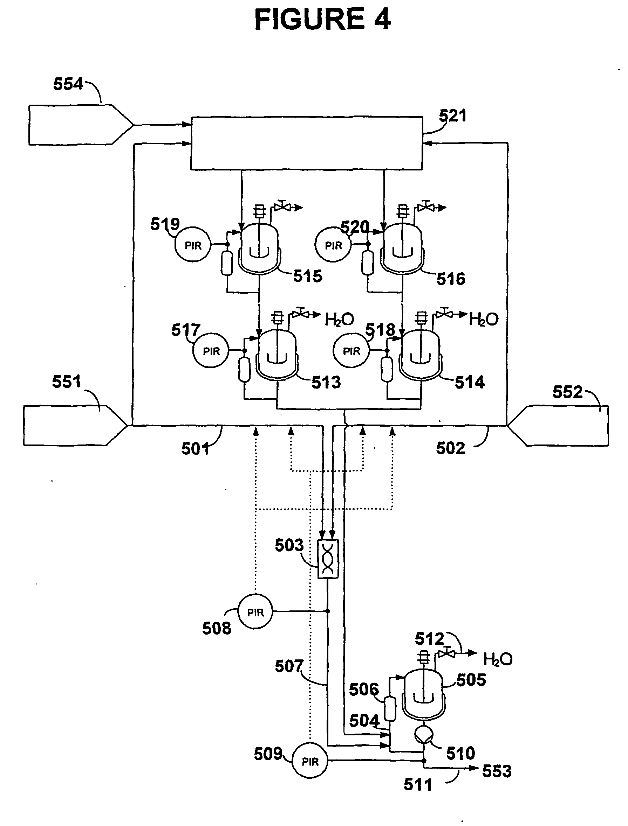

Dans l'exemple illustré, dont la description détaillée est réalisée en référence à la figure 4 qui représente un schéma synoptique d'une partie du procédé de l'invention, la solution de Sel N concentré à 62% est fabriquée dans l'atelier 521. Celle-ci est alimentée en continu par au moins deux réservoirs tampons du type 515 et 516 se vidant alternativement par respiration entre un niveau maximal et un niveau minimal. Ces réservoirs inertés à l'azote sont munis d'un mode d'agitation par recirculation externe afin d'en homogénéiser le contenu et d'y contrôler le pH et la concentration avant alimentation de l'unité de polycondensation.

### Etat 1 : remplissage des installations

Après les tests en eau usuels précédant le démarrage de l'installation de polycondensation, l'alimentation en eau est remplacée par une alimentation d'une solution de Sel N 62% introduite à 109°C, dans l'un des deux réacteurs agités 513 et 514. Ces deux réacteurs sont munis d'une boucle de recirculation constituée d'une pompe, d'un échangeur de chaleur et d'un point de mesure proche infra rouge. Couplés aux réservoirs tampons 515 et 516, ils fonctionnent alternativement de façon à alimenter en continu le réacteur agité 505 par l'intermédiaire de sa boucle de recirculation 504.

### Etat 2: mise en régime des réacteurs 513 et 514 dans les conditions du régime permanent.

Après stabilisation des niveaux lors de l'étape précédente, les consignes de température des réacteurs 513, 514, et 505 sont fixées à 180°C. La pression autogène correspondante est ensuite régulée à 6 bars absolus.

La concentration du Sel N en sortie du réacteur 505 est de 90%.

### Etat 3: mise en régime du réacteur 505 dans les conditions du régime permanent (avec alimentation en solution de sel N)

Une fois la consigne de température de 180°C atteinte dans le réacteur 505, celle-ci y est réglée sur 260°C et les niveaux sont régulés pour obtenir un temps de séjour estimé d'environ 40 minutes. La pression autogène est ensuite régulée à 15 bars. La masse molaire moyenne en nombre mesurée sur un extrait sec est d'environ 3800 g/mol. Ce flux alimente en continu l'aval du procédé de polycondensation constitué par une association en série d'un flasheur, d'un séparateur vapeur/prépolymère et d'un finisseur. Le polymère obtenu en sortie du finisseur présente un indice de viscosité mesuré dans l'acide formique dilué conformément aux conditions et recommandations de la norme internationale ISO 307-1984 de 130 mUg.

Le produit sortant de la cascade de réacteurs agités est du prépolymère qui conduit, après montée en masse, à un polymère d'indice de viscosité convenant à la plupart des applications de transformation, soit directement en sortie du finisseur, soit après granulation puis refusion.

Cette étape peut être avantageusement utilisée pour la calibration des points de mesure de la stoechiométrie par proche infra rouge telle qu'une description en est faite dans l'exemple 2.

### Etat 4: Etat final correspondant au régime permanent (avec alimentation en monomères fondus)

Lorsque l'ensemble des points de mesure proche infra rouge a été étalonné, et le spectromètre ainsi calibré, de manière précise et fiable pour permettre la conduite du procédé en régime permanent, l'alimentation de Sel N 62% à l'entrée du réacteur de type 513 ou 514 est remplacée par une alimentation continue du mélange M5 préalablement décrit à l'entrée de la zone de mélange 503. Le temps de séjour réglé à environ 20 minutes.

La régulation de la stoechiométrie à partir des mesures en ligne par proche infra rouge est activée : le couplage entre la régulation de la stoechiométrie du flux de sortie du réacteur 505 et sa régulation de niveau permet d'ajuster les débits des deux flux d'alimentation 501 et 502.

Ce mode de démarrage du procédé d'amidification directe à partir d'une solution aqueuse de monomères permet d'atteindre le régime permanent décrit au début de cet exemple 3 en permettant l'étalonnage des points de mesure de la stoechiométrie par proche infra rouge et en minimisant, dans la phase d'étalonnage, les risques de production de polymère hors spécifications.

Pour les mesures par spectrométrie proche infra rouge et la calibration, on utilise le dispositif de dérivations primaire et secondaire décrit dans l'exemple 2.

Cette procédure d'étalonnage peut être utilisée judicieusement à l'un ou l'autre des points de mesure 508, 509, 517, 518, 519 ou 520 mentionnés sur la figure 4 pour le contrôle en ligne de la stoechiométrie, voire de la teneur en eau, quel que soit le taux d'avancement de la polycondensation, depuis les monomères et le Sel N jusqu'au prépolymère sortant du dernier réacteur et, plus en aval, au polymère sortant du finisseur.

## Revendications

1. Procédé de fabrication en continu de polyamide, à partir de diacides carboxyliques et de diamines, comprenant en régime permanent les étapes suivantes:
- mélange en continu de deux flux de précurseurs du polyamide, un flux riche en groupements terminaux acides, et un flux riche en groupements terminaux amines,
- condensation à partir du mélange des deux flux,
le mélange et la condensation étant mis en oeuvre dans une même installation ou dans des installations différentes,
- récupération d'un flux de produit issu de l'opération de condensation,
au moins un des débits des flux de précurseur étant asservi au résultat de l'analyse des teneurs en groupements terminaux acides et amines du mélange, du milieu de condensation ou du flux récupéré, de manière à maintenir ces teneurs et/ou leur rapport entre deux valeurs de consigne,
**caractérisé en ce que** la phase de démarrage comprend les étapes suivantes:
- étape 1:
- Alimentation de l'installation de condensation en une solution aqueuse comprenant des ions dicarboxylates et des ions diammoniums, en proportions telles que leur rapport molaire soit compris entre 0,99 et 1,01, de préférence entre 0,995 et 1,005
- Mise en régime de l'installation de condensation dans des conditions de température et de pression telles qu'il y ait condensation à partir des ions dicarboxylates et des ions diammoniums initialement compris dans la solution aqueuse
- étape 2: récupération d'un flux du produit de condensation
- étape 3: alimentation en flux de précurseurs et activation de l'analyse et de l'asservissement.

2. Procédé selon la revendication 1 **caractérisé en ce que** le flux de produit récupéré est alimenté dans des installations de flashage et/ou de finition de manière à obtenir un polyamide de degré de polymérisation désiré.

3. Procédé selon l'une des revendications 1 ou 2 **caractérisé en ce que** la condensation à partir de la solution aqueuse est réalisée à température supérieure à 180°C, à pression supérieure à 5 bars, le produit récupéré présentant un degré de polycondensation supérieur à 10, de préférence supérieur à 20, et **en ce que** la température et la pression sont identiques à la température et à la pression en régime permanent.

4. Procédé selon l'une des revendications 1 ou 2, **caractérisé en ce que** l'analyse est réalisée par spectrométrie Proche Infra-Rouge.

5. Procédé selon la revendication 4 **caractérisé en ce qu'**au moins une partie du flux du produit de condensation à partir de la solution est récupérée et utilisée pour calibrer le spectromètre Proche Infra-Rouge dans la gamme désirée de teneurs en groupements terminaux et/ou en rapports des teneurs, l'alimentation en deux flux, l'analyse et l'asservissement étant activés après cette opération.

6. Procédé selon la revendication 4 **caractérisé en ce que** la calibration est effectuée par la méthode des ajouts dosés dans la partie du flux récupérée à cet effet.

7. Procédé selon l'une des revendications précédentes, **caractérisé en ce que** les monomères diacides sont choisis dans la liste comprenant les acides adipique, glutarique, subérique, sébacique, dodécanedioïque, isophtalique, téréphtalique, azélaïque, pimélique.

8. Procédé selon l'une des revendications précédentes, **caractérisé en ce que** les monomères diamines sont choisis dans la liste comprenant l'hexaméthylène diamine, l'heptaméthylène diamine, l'octaméthylène diamine, la nonaméthylène diamine, la décaméthylène diamine, la méthyl-5 pentaméthylène diamine, l'undécaméthylène diamine, la dodécaméthylène diamine, la xylylène diamine.

9. Procédé selon l'une des revendications précédentes, **caractérisé en ce que** le monomère diacide comprend au moins 80 % en mole d'acide adipique.

10. Procédé selon l'une des revendications précédentes, **caractérisé en ce que** le monomère diamine comprend au moins 80 % en mole d'hexaméthylène diamine.

11. Procédé selon l'une des revendications précédentes **caractérisé en ce que** :
- le flux riche en groupement terminaux acides est un mélange M2 de diacide et de diamine avec un rapport molaire diacide/diamine compris entre 1,005 et 1,2, de préférence entre 1,01 et 1,2
- le flux riche en groupement terminaux amines est un mélange M3 de diacide et de diamine avec un rapport molaire diacide/diamine compris entre 0,8 et 0,995, de préférence entre 0,8 et 0,99
- les deux flux sont alimentés sous forme fondue dans un réacteur de polymérisation agité dans lequel la condensation est effectuée
- le produit de condensation est un prépolymère alimenté dans des étapes de flashage et/ou de finition pour obtenir le degré de polymérisation désiré

12. Procédé selon la revendication 11 **caractérisé en ce que** les deux flux sont mélangés avant l'alimentation dans l'installation de condensation

13. Procédé selon l'une des revendications 11 ou 12 **caractérisé en ce que** le réacteur de polymérisation fonctionne sous une pression autogène ou une pression régulée.

14. Procédé selon l'une des revendication 11 à 13 **caractérisé en ce que** les précurseurs M2 et M3 sont obtenus, en régime permanent, par mélange d'une solution de monomère diamine avec un mélange M1 riche en monomère diacide

15. Procédé selon la revendication 14 **caractérisé en ce qu'**au moins un des débits des flux d'entrée en solution de monomères diamines et en mélangé M1 riche en monomère diacide est asservi au résultat de l'analyse en continu des fonctions acides et amines dans les précurseurs M2 et M3.

16. Procédé selon l'une des revendications 11 à 15, **caractérisé en ce que** les précurseurs sont préparés en régime permanent par mélange d'un flux d'hexaméthylène diamine avec un mélange eutectique acide adipique / hexaméthylène diamine.

17. Procédé selon la revendication 15 ou 16 **caractérisé en ce que** les précurseurs sont préparés par un procédé comprenant les étapes suivantes :
- Alimentation de chacune des installations de préparation des précurseurs en une solution aqueuse comprenant des ions dicarboxylates et des ions diammoniums, en proportions telles que leur rapport molaire soit compris entre 0,99 et 1,01, de préférence entre 0,995 et 1,005
- Mise en régime des installations de préparation des précurseurs dans les conditions de température et de pression du régime permanent
- dans chacune des installations de préparation de précurseurs, alimentation en flux de mélange M1 riche en monomère diacide, en flux d'hexaméthylène diamine, activation de l'asservissement d'au moins un des flux, alimentation du produit obtenu dans l'installation de mélange ou de condensation

18. Procédé selon l'une des revendications 15 à 17 **caractérisé en ce que** le mélange eutectique M1 est préparé par mélange d'un flux d'acide adipique fondu ou solide, et d'un flux d'hexaméthylène diamine sous forme pure ou sous forme d'une solution aqueuse concentrée, avec asservissement d'au moins un des flux au résultat de l'analyse de la teneur en groupements acides et amines dans le mélange M1, le procédé comprenant les étapes suivantes :
- Alimentation de l'installation de préparation du mélange eutectique en une solution aqueuse comprenant des ions dicarboxylates et des ions diammoniums, en proportions telles que leur rapport molaire soit compris entre 0,99 et 1,01, de préférence entre 0,995 et 1,005
- Mise en régime dans les conditions de température et de pression du régime permanent
- alimentation en flux d'acide adipique, en flux d'hexaméthylène diamine, activation de l'asservissement d'au moins un des flux, alimentation du produit obtenu dans les installations de préparation des précurseurs.

19. Procédé selon l'une des revendications 1 à 10 **caractérisé en ce que** :
- le flux riche en groupements terminaux acides est un diacide carboxylique sous forme fondue,
- le flux riche en groupements terminaux amines est une diamine sous forme pure ou sous forme de solution aqueuse concentrée,

20. Procédé selon la revendication 18 **caractérisé en ce que** le diacide est l'acide adipique et la diamine est l'hexaméthylène diamine.

## Patentansprüche

1. Verfahren zur kontinuierlichen Herstellung von Polyamid ausgehend von Dicarbonsäuren und Diaminen, umfassend in einem permanenten Regime die folgenden Stufen:
- kontinuierliches Vermischen von zwei Strömen von Vorläufern des Polyamids, von einem Strom, der reich an terminalen Säuregruppen ist und von einem Strom, der reich an terminalen Amingruppen ist,
- Kondensation ausgehend von der Mischung der zwei Ströme,
wobei das Vermischen und die Kondensation in der gleichen Anlage oder in verschiedenen Anlagen durchgeführt werden,
- Gewinnung eines Produktstromes, der aus dem Arbeitsgang der Kondensation stammt,
wobei mindestens einer der Durchsätze der Vorläufer-Ströme unter Berücksichtigung des Ergebnisses der Analyse der Mischung, des Kondensationsmediums oder des gewonnenen Stromes über den Gehalt an terminalen Säuregruppen und Amingruppen in der Weise geregelt wird, daß diese Gehalte und/oder ihr Verhältnis zwischen zwei Sollwerten aufrechterhalten werden,
**dadurch gekennzeichnet, daß** die Startphase die folgenden Stufen umfaßt:
- Stufe 1:
- Speisung der Kondensationsanlage mit einer wäßrigen Lösung, die Dicarboxylat-Ionen und Diammonium-Ionen in solchen Verhältnissen umfaßt, daß ihr molares Verhältnis zwischen einschließlich 0,99 und 1,01, vorzugsweise zwischen 0,995 und 1,005 beträgt,
- Einrichtung der Kondensationsanlage unter solchen Betriebsbedingungen von Temperatur und Druck, wie es sie bei der Kondensation ausgehend von Dicarboxylat-Ionen und Diammonium-Ionen gibt, die am Anfang in der wäßrigen Lösung vorliegen,
- Stufe 2: Gewinnung eines Produktstromes aus der Kondensation,
- Stufe 3: Speisung mit Vorläufer-Strömen und Aktivierung der Analyse und der Regelung.

2. Verfahren nach Anspruch 1, **dadurch gekennzeichnet, daß** der gewonnene Produktstrom in Anlagen zur Entspannungsverdampfung (Flashage) und/oder Fertigbehandlung eingespeist wird, so daß man ein Polyamid mit dem gewünschten Polymerisationsgrad erhält.

3. Verfahren nach einem der Ansprüche 1 oder 2, **dadurch gekennzeichnet, daß** die Kondensation ausgehend von der wäßrigen Lösung bei einer Temperatur von über 180 °C und einem Druck von über 5 bar realisiert wird, wobei das gewonnene Produkt einen Polykondensationsgrad von über 10, vorzugsweise von über 20 aufweist, und **dadurch**, daß die Temperatur und der Druck mit der Temperatur und dem Druck identisch sind, wie sie im permanenten Regime vorliegen.

4. Verfahren nach einem der Ansprüche 1 oder 2, **dadurch gekennzeichnet, daß** die Analyse durch Spektrometrie im Bereich des nahen Infrarots realisiert wird.

5. Verfahren nach Anspruch 4, **dadurch gekennzeichnet, daß** mindestens ein Teil des Produktstromes der Kondensation ausgehend von der Lösung gesammelt und zur Kalibrierung des Nahen-Infrarot-Spektrometers in der gewünschten Skala von Gehalten an terminalen Gruppen und/oder an Verhältnissen der Gehalte verwendet wird, wobei die Speisung mit zwei Strömen, die Analyse und die Regelung nach dieser Operation aktiviert werden.

6. Verfahren nach Anspruch 4, **dadurch gekennzeichnet, daß** die Kalibrierung durch die Methode von dosierten Zusätzen in dem Teil des zu diesem Zweck gewonnenen Stromes durchgeführt wird.

7. Verfahren nach einem der vorstehenden Ansprüche, **dadurch gekennzeichnet, daß** die monomeren Disäuren aus der Liste gewählt werden, die Adipinsäure, Glutarsäure, Suberinsäure, Sebacinsäure, Dodecandisäure, Isophthalsäure, Terephthalsäure, Azelainsäure und Pimelinsäure umfaßt.

8. Verfahren nach einem der vorstehenden Ansprüche, **dadurch gekennzeichnet, daß** die monomeren Diamine aus der Liste gewählt werden, die Hexamethylendiamin, Heptamethylendiamin, Octamethylendiamin, Nonamethylendiamin, Decamethylendiamin, 5-Methyl-pentamethylendiamin, Undecamethylendiamin, Dodecamethylendiamin und Xylylendiamin umfaßt.

9. Verfahren nach einem der vorstehenden Ansprüche, **dadurch gekennzeichnet, daß** die monomere Disäure mindestens 80 Mol-% Adipinsäure umfaßt.

10. Verfahren nach einem der vorstehenden Ansprüche, **dadurch gekennzeichnet, daß** das monomere Diamin mindestens 80 Mol-% Hexamethylendiamin umfaßt.

11. Verfahren nach einem der vorstehenden Ansprüche, **dadurch gekennzeichnet, daß**
- der an terminalen Säuregruppen reiche Strom eine Mischung M2 von Disäure und Diamin ist, mit einem molaren Verhältnis Disäure/Diamin zwischen einschließlich 1,005 und 1,2, vorzugsweise zwischen 1,01 und 1,2,
- der an terminalen Amingruppen reiche Strom eine Mischung M3 von Disäure und Diamin ist, mit einem molaren Verhältnis Disäure/Diamin zwischen einschließlich 0,8 und 0,995, vorzugsweise zwischen 0,8 und 0,99,
- die zwei Ströme in geschmolzener Form in einen gerührten Polymerisationsreaktor eingespeist werden, in dem die Kondensation durchgeführt wird,
- das Produkt der Kondensation ein Prepolymer ist, das in die Stufen der Entspannungsverdampfung (Flashage) und/oder Fertigbehandlung eingespeist wird, um den gewünschten Polymerisationsgrad zu erhalten.

12. Verfahren nach Anspruch 11, **dadurch gekennzeichnet, daß** die zwei Ströme vor der Einspeisung in die Kondensationsanlage vermischt werden.

13. Verfahren nach einem der Ansprüche 11 oder 12, **dadurch gekennzeichnet, daß** der Polymerisationsreaktor unter einem autogenen oder einem geregelten Druck arbeitet.

14. Verfahren nach einem der Ansprüche 11 bis 13, **dadurch gekennzeichnet, daß** die Vorläufer M2 und M3 im permanenten Regime durch Vermischen einer Lösung von monomerem Diamin mit einer Mischung M1 erhalten werden, die reich an monomerer Disäure ist.

15. Verfahren nach Anspruch 14, **dadurch gekennzeichnet, daß** mindestens einer der Durchsätze der Eintrittsströme aus der Lösung von monomeren Diaminen und einer Mischung M1, die reich an monomerer Disäure ist, anhand des Ergebnisses der kontinuierlichen Analyse der Säurefunktionen und Aminfunktionen in den Vorläufern M2 und M3 geregelt wird.

16. Verfahren nach einem der Ansprüche 11 bis 15, **dadurch gekennzeichnet, daß** die Vorläufer im permanenten Regime durch Vermischen eines Stromes von Hexamethylendiamin mit einer eutektischen Mischung Adipinsäure/Hexamethylendiamin hergestellt werden.

17. Verfahren nach Anspruch 15 oder 16, **dadurch gekennzeichnet, daß** die Vorläufer durch ein Verfahren hergestellt werden, das die folgenden Stufen umfaßt:
- Einspeisung in jede der Anlagen zur Herstellung der Vorläufer von einer wäßrigen Lösung, die Dicarboxylat-Ionen und Diammonium-Ionen in solchen Verhältnissen umfaßt, daß ihr molares Verhältnis zwischen einschließlich 0,99 und 1,01, vorzugsweise zwischen 0,995 und 1,005 beträgt,
- Einrichtung in den Anlagen zur Herstellung der Vorläufer von solchen Betriebsbedingungen von Temperatur und Druck, wie sie im permanenten Regime vorliegen,
- Einspeisung in jede der Anlagen zur Herstellung der Vorläufer von einem Strom der Mischung M1, die reich an monomerer Disäure ist, und einem Strom von Hexamethylendiamin, Aktivierung der Regelung von mindestens einem der Ströme, Einspeisung des erhaltenen Produktes in die Anlage der Mischung oder der Kondensation.

18. Verfahren nach einem der Ansprüche 15 bis 17, **dadurch gekennzeichnet, daß** die eutektische Mischung M1 durch Vermischen eines Stromes von geschmolzener oder fester Adipinsäure und eines Stromes von Hexamethylendiamin in reiner Form oder in Form einer konzentrierten wäßrigen Lösung hergestellt wird, mit Regelung von mindestens einem der Ströme anhand des Ergebnisses der Analyse des Gehaltes an Säuregruppen und an Amingruppen in der Mischung M1, wobei das Verfahren die folgenden Stufen umfaßt:
- Einspeisung in die Anlage zur Herstellung der eutektischen Mischung von einer wäßrigen Lösung, die Dicarboxylat-Ionen und Diammonium-Ionen in solchen Verhältnissen umfaßt, daß ihr molares Verhältnis zwischen einschließlich 0,99 und 1,01, vorzugsweise zwischen 0,995 und 1,005 beträgt,
- Einrichtung von solchen Betriebsbedingungen von Temperatur und Druck, wie sie im permanenten Regime vorliegen,
- Einspeisung eines Stromes von Adipinsäure, eines Stromes von Hexamethylendiamin, Aktivierung der Regelung von mindestens einem der Ströme, Einspeisung des erhaltenen Produktes in die Anlagen zur Herstellung der Vorläufer.

19. Verfahren nach einem der Ansprüche 1 bis 10, **dadurch gekennzeichnet, daß**
- der an terminalen Säuregruppen reiche Strom eine Dicarbonsäure in geschmolzener Form ist,
- der an terminalen Amingruppen reiche Strom ein Diamin in reiner Form oder in Form einer konzentrierten wäßrigen Lösung ist.

20. Verfahren nach Anspruch 18, **dadurch gekennzeichnet, daß** die Disäure Adipinsäure ist und das Diamin Hexamethylendiamin ist.

## Claims

1. Process for the continuous manufacture of polyamide, starting with dicarboxylic acids and diamines, comprising, in a permanent regime, the following steps:
- continuous mixing of two flows of polyamide precursors, one flow rich in acid end groups, and one flow rich in amine end groups,
- condensation using the mixture of the two flows, the mixing and condensation being carried out in the same plant or in different plants,
- recovery of a flow of product obtained from the condensation operation,
at least one of the flow rates of the flows of precursor being coupled to the result of the analysis of the contents of acid and amine end groups in the mixture, the condensation medium or the recovered flow, so as to keep these contents and/or their ratio between two nominal values,
**characterized in that** the starting phase comprises the following steps:
- Step 1:
- feeding the condensation plant with an aqueous solution comprising dicarboxylate ions and diammonium ions, in proportions such that their molar ratio is between 0.99 and 1.01 and preferably between 0.995 and 1.005,
- establishment of the operating regime in the condensation plant under temperature and pressure conditions such that there is condensation starting with the dicarboxylate ions and the diammonium ions initially included in the aqueous solution,
- Step 2: recovery of a flow of the condensation product
- Step 3: supplying a flow of precursors and activating the analysis and the coupling.

2. Process according to Claim 1, **characterized in that** the flow of recovered product is fed into flashing and/or finishing plants so as to obtain a polyamide with a desired degree of polymerization.

3. Process according to either of Claims 1 and 2, **characterized in that** the condensation using the aqueous solution is performed at a temperature above 180°C, at a pressure above 5 bar, the product recovered having a degree of polycondensation of greater than 10, preferably of greater than 20, and **in that** the temperature and pressure are identical to the temperature and pressure in the permanent regime.

4. Process according to either of Claims 1 and 2, **characterized in that** the analysis is performed by Near InfraRed spectrometry.

5. Process according to Claim 4, **characterized in that** at least some of the flow of the condensation product from the solution is recovered and used to calibrate the Near InfraRed spectrometer in the desired range of contents of end groups and/or of ratios of contents, the feeding with two flows, the analysis and the coupling being activated after this operation.

6. Process according to Claim 4, **characterized in that** the calibration is carried out by the method of dosed additions into the part of the flow recovered for this purpose.

7. Process according to one of the preceding claims, **characterized in that** the diacid monomers are chosen from the list comprising adipic acid, glutaric acid, suberic acid, sebacic acid, dodecanedioic acid, isophthalic acid, terephthalic acid, azelaic acid and pimelic acid.

8. Process according to one of the preceding claims, **characterized in that** the diamine monomers are chosen from the list comprising hexamethylenediamine, heptamethylenediamine, octamethylenediamine, nonamethylenediamine, decamethylenediamine, 5-methylpentamethylenediamine, undecamethylenediamine, dodecamethylenediamine and xylylenediamine.

9. Process according to one of the preceding claims, **characterized in that** the diacid monomer comprises at least 80 mol% of adipic acid.

10. Process according to one of the preceding claims, **characterized in that** the diamine monomer comprises at least 80 mol% of hexamethylenediamine.

11. Process according to one of the preceding claims, **characterized in that**:
- the flow which is rich in acid end groups is a mixture M2 of diacid and of diamine with a diacid/diamine molar ratio of between 1.005 and 1.2 and preferably between 1.01 and 1.2
- the flow which is rich in amine end groups is a mixture M3 of diacid and of diamine with a diacid/diamine molar ratio of between 0.8 and 0.995 and preferably between 0.8 and 0.99
- the two flows are fed in melt form into a stirred polymerization reactor in which the condensation is carried out
- the condensation product is a prepolymer fed into flashing and/or finishing steps to obtain the desired degree of polymerization.

12. Process according to Claim 11, **characterized in that** the two flows are mixed together before feeding into the condensation plant.

13. Process according to either of Claims 11 and 12, **characterized in that** the polymerization reactor operates under an autogenous pressure or an adjusted pressure.

14. Process according to one of Claims 11 to 13, **characterized in that** the precursors M2 and M3 are obtained, in a permanent regime, by mixing a solution of diamine monomer with a mixture M1 which is rich in diacid monomer.

15. Process according to Claim 14, **characterized in that** at least one of the flow rates of the flows for introducing diamine monomer solution and mixture M1 which is rich in diacid monomer is coupled to the result of the continuous analysis of the acid and amine functions in the precursors M2 and M3.

16. Process according to one of Claims 11 to 15, **characterized in that** the precursors are prepared in a permanent regime by mixing a flow of hexamethylenediamine with an adipic acid/hexamethylenediamine eutectic mixture.

17. Process according to Claim 15 or 16, **characterized in that** the precursors are prepared by a process comprising the following steps:
- feeding each of the precursor preparation plants with an aqueous solution comprising dicarboxylate ions and diammonium ions in proportions such that their molar ratio is between 0.99 and 1.01 and preferably between 0.995 and 1.005
- establishing the operating regime in the precursor preparation plants under the temperature and pressure conditions of the permanent regime
- in each of the precursor preparation plants, feeding a flow of mixture M1 which is rich in diacid monomer, a flow of hexamethylenediamine, activation of the coupling of at least one of the flows, feeding the product obtained into the mixing or condensation plant.

18. Process according to one of Claims 15 to 17, **characterized in that** the eutectic mixture M1 is prepared by mixing a flow of adipic acid melt or solid, and a flow of hexamethylenediamine in pure form or in the form of a concentrated aqueous solution, with coupling of at least one of the flows to the result of the analysis of the content of acid and amine groups in the mixture M1, the process comprising the following steps:
- feeding the plant for preparing the eutectic mixture with an aqueous solution comprising dicarboxylate ions and diammonium ions, in proportions such that their molar ratio is between 0.99 and 1.01 and preferably between 0.995 and 1.005
- establishing the operating regime under the temperature and pressure conditions of the permanent regime
- feeding a flow of adipic acid, a flow of hexamethylenediamine, activation of the coupling of at least one of the flows, feeding the product obtained into the precursor preparation plants.

19. Process according to one of Claims 1 to 10, **characterized in that**:
- the flow which is rich in acid end groups is a dicarboxylic acid in melt form,
- the flow which is rich in amine end groups is a diamine in pure form or in the form of a concentrated aqueous solution.

20. Process according to Claim 18, **characterized in that** the diacid is adipic acid and the diamine is hexamethylenediamine.
